# EUROPÄISCHE PATENTANMELDUNG

(11) **EP 1 495 677 A1**
(43) Veröffentlichungstag der Anmeldung: **12.01.2005**
(21) Anmeldenummer: 04015642.4
(22) Anmeldetag: 02.07.2004
(51) Int. Cl.: A01K 97/22, A47C 9/10

(54) **Fischersessel**

(30) Priorität: 07.07.2003 AT 10332003
(71) Anmelder: Riegerbauer, Hermann, 8430 Leibnitz (AT)
(72) Erfinder: Riegerbauer, Hermann, 8430 Leibnitz (AT)

(57) **Zusammenfassung**

Fischersessel ( 1 ), welcher eine Sitzfläche (2), zwei Armlehnen (3), eine Rückwand (4), zwei vordere und zwei hintere Sesselbeine (5) umfasst, wobei die Rückwand (4) als Rutenkasten (7) ausgebildet ist. Der Rutenkasten (7) ist abnehmbar und verschließbar. Zusätzlich kann der Fischersessel (1) mit Rädern (6) ausgestattet werden. Dadurch wird dem Fischer ein leichter Transport des Fischersessels (1) ermöglicht.

## Beschreibung

Die Erfindung betrifft einen Fischersessel, welcher eine Sitzfläche, zwei Armlehnen, eine Rückwand, zwei vordere und zwei hintere Sesselbeine umfasst.

Aus der Patentschrift US 6,203,103 ist ein zusammenklappbarer Fischersessel bekannt, der abnehmbare Auftriebskörper umfasst, damit zumindest ein Teil der Fischereiausrüstung über dem Wasserspiegel bleibt, wenn der Fischer durch tieferes Wasser waten muss. Diese Vorgehensweise kann von Zeit zu Zeit notwendig sein um besonders gute Fischplätze zu erreichen. Der Fischersessel kann auf diese Weise durch das Wasser gezogen werden und ein Teil der Fischereiausrüstung bleibt trocken. Sobald der Angelplatz erreicht ist, kann der Fischersessel aufgeklappt werden. Dieser Fischersessel umfasst verlängerte Beine, die am unteren Ende verbreiterte Standflächen aufweisen, damit ein sicherer Stand des Fischersessels auf sandigem Grund gegeben ist. Ein Nachteil dieses Fischersessels ist, dass nicht die gesamte Ausrüstung, die für das Fischen notwendig ist, sorgfältig in diesem Fischersessel verstaut werden kann und damit leicht Teile dieser Ausrüstung verloren gehen können und dem Fischer ein wirtschaftlicher Schaden entsteht kann.

Eine Aufgabe der Erfindung ist es daher, eine Fischersessel zu schaffen, bei dem sehr schwer Teile der Ausrüstung verloren gehen können.

Dies Aufgabe wird erfindungsgemäß mit einem Fischersessel der eingangs genannten Art dadurch gelöst, dass die Rückwand des Fischersessels als Rutenkasten ausgebildet ist.

Es ist ein Verdienst der Erfindung, dass die gesamte Ausrüstung, die ein Fischer für seine Tätigkeit benötigt sicher in dem Rutenkasten verstaut werden und ein Verlust von teurem Angelzeug vermieden werden kann.

In einer bevorzugten Ausführungsform ist der bereits erwähnte Rutenkasten abnehmbar an dem Fischersessel angebracht.

Günstigerweise ist der Rutenkasten verschließbar, um ein Herausfallen des Angelzeugs zu vermeiden.

Ein weiterer Vorteil der Erfindung liegt darin, dass die Sesselbeine verstellt werden können und so ideal auf die Körpergröße des Fischers eingerichtet werden können. Außerdem erlauben die verstellbaren Sesselbeine auch ein sicheres Aufstellen des Fischersessels in unebenem Gelände. An Stelle der vorderen Sesselbeine kann auch eine Leiste am Fischersessel angebracht sein, die die ganze Breite des Fischersessels umfasst. Diese Leiste gewährleistet einen besonders stabilen Stand des Fischersessels auf weichem Untergrund.

In einer bevorzugten Ausführungsform weist der Fischersessel an Stelle der hinteren Sesselbeine Räder auf, um einen Transport des Rutenkastens oder gesamten Fischersessels zu erleichtern. Auf diese Weise kann der Fischersessel ganz leicht in unwegsamen Gelände transportiert werden.

Ein weiterer Vorteil der Erfindung liegt darin, dass der Rutenkasten mit Trageriemen ausgestattet und daher für den Transport in besonders schwierigem Gelände geeignet ist.

In einer weiteren bevorzugten Ausführungsform weist der Fischersessel unter der Sitzfläche mindestens ein Staufach auf. In diesem Staufach, welches zusätzlich auch mit einem Schnappverschluß oder ähnlicher Sicherung gegen ein Aufgehen ausgestattet sein kann, können diverse Kleinmaterialien wie Fischerschnur oder Schwimmer sicher verstaut werden. Dieses Staufach kann auch als Schublade ausgebildet sein.

Eine vorteilhafte Variante des Fischersessels umfasst eine Schleppgriff um den Fischersessel leicht aufkippen zu können und auf den Rädern zu schleppen. Vorteilhafterweise ist dieser Schleppgriff als Teleskopschleppgriff und damit ausziehbar ausgebildet.

In der Praxis bewährt hat sich auch, dass der Rutenkasten eine Aufnahme für einen Schirm um fasst. Der Fischer kann den Schirm im Rutenkasten verstauen und bei Bedarf herausnehmen. Auf diese Weise kann sich der Fischer gegen Sonne und Regen schützen.

Um eine Halterung für eine Angelrute zu schaffen, besteht eine vorteilhafte Ausführungsform darin, dass ein Hacken an der Armlehne des Fischersessels und ein zweiter Hacken am Rutenkasten so angebracht sind, dass der Hacken an der Armlehne als Auflage und der Hacken am Rutenkasten als Fixierung für eine Angelrute dient.

Eine günstige Ausführungsform der Erfindung sieht vor, dass in die Armlehne eine aufklappbare Ablage integriert ist. Der Fischer kann dort diverse Kleinmaterialien wie Fischköder oder Schwimmer ablegen.

Einen Ausführungsform mit einem hohen praktischen Nutzen besteht darin, dass der Rutenkasten mindestens eine Befestigungsleiste umfasst. Diese Befestigungsleisten erlauben ein sicheres Verstauen von zum Beispiel den Angelruten und dem Schirm. Die Tür des Rutenkastens kann Verstrebungen aufweisen, die ebenfalls mit Hilfe von Elastomeren als Kassettenhalterungen genutzt werden können. Kassetten, die in der Tür des Rutenkastens verstaut werden können, sind standardisierte Aufbewahrungsboxen für Fichereizubehör.

Die Erfindung samt weiterer Vorteile ist im Folgenden anhand einiger nicht einschränkender Ausführungsbeispiele näher erläutert, welche in der Zeichnung dargestellt sind. In dieser zeigen:
Fig. 1 einen Schrägriss des erfindungsgemäßen Fischersessels in perspektivischer Ansicht;
Fig. 2 eine perspektivische Ansicht des Rutenkastens getrennt vom Fischersessel;
Fig. 3 eine Ansicht einer Variante des erfindungsgemäßen Fischersessels mit geöffnetem Rutenkasten.

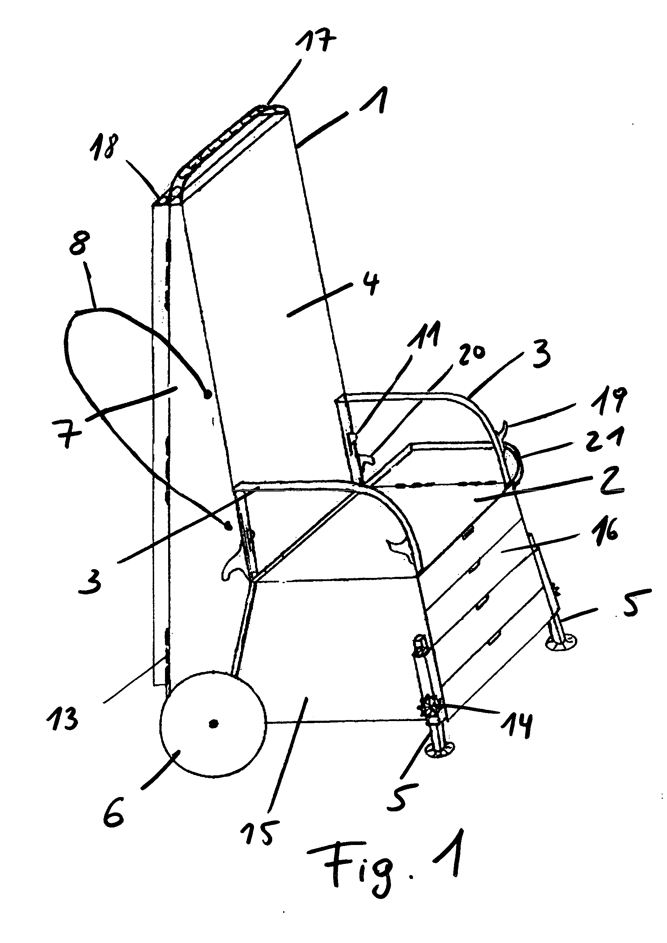

Gemäß Fig. 1 weist der erfindungsgemäßen Fischersessels 1 eine Sitzfläche 2, zwei Armlehnen 3, eine Rückwand 4, zwei vordere und zwei hintere Sesselbeine 5 auf. Alternativ können wie in Fig. 1 gezeigt auch Räder 6 an Stelle der zwei hinteren Sesselbeine 5 verwendet werden. Die Rückwand 4 des Fischersessels 1 ist als Rutenkasten 7 ausgebildet. Der Rutenkasten 7 kann sich über den Bereich der Rückwand 4 erstrecken. Vorzugsweise erstreckt sich der Rutenkasten 7 über die gesamte Höhe des Fischersessels 1.

An der Oberseite des Rutenkastens 7 kann ein Schleppgriff 17, der vorzugsweise als Teleskopschleppgriff ausgebildet ist, angebracht sein. Dieser Schleppgriff 7 erlaubt es, dass der Fischersessel 1 sehr einfach vom Fischer über eine längere Strecke gezogen werden kann. Durch die Ausfuhrungsform als Teleskopschleppgriff kann der Schleppgriff 7 individuell auf die Körpergröße des Fischers eingestellt werden. Zusätzlich umfasst die Oberseite des Rutenkastens 7 eine Aufnahme 18 für einen Schirm. Diese Aufnahme 18 kann als rohrförmige Führung im Rutenkasten 7 ausgebildet sein. Der Schirm für den Schutz des Fischers vor Sonne und Regen kann im Rutenkasten 7 verstaut werden. Vorzugsweise seitlich am Rutenkasten 7 sind Trageriemen 8 angebracht. Diese Trageriemen 8 erlauben dem Fischer den Fischersessel 1 oder nur den Rutenkasten 7 in unwegsamen Gelände zu transportieren, da mit Hilfe dieser Trageriemen 8 der Fischersessel 1 wie ein Rucksack geschultert werden kann.

Gemäß einer bevorzugten Ausführungsform, wie in Fig. 1 dargestellt, weist der Rutenkasten 7 Scharniere 13 auf, um ein leichtes Öffnen der Tür des Rutenkastens 7 zu erreichen. Die Tür des Rutenkastens 7 ist vorzugsweise 5 bis 10 cm tief, um die Tür ebenfalls als Stauraum benutzen zu können.

Wie in Fig. 1 gezeigt, weist der Rutenkasten 7 im hinteren Bereich der Armlehne 3 einen Fixierhacken 20 auf. In Kombination mit dem Auflagehacken 19, der verstellbar im vorderen Bereich der Armlehne 3 angebracht sein kann, stellen der Fixierhacken 20 und der Auflagehacken 19 eine Möglichkeit dar, wie der Fischer seine Angelrute während des Fischens ablegen kann. Durch diese Art der Auflage kann der Fischer, im Fall dass ein Fisch anbeißt, rasch reagieren und an der Angelrute ziehen um den Fisch zu arretieren. Ein zusätzlicher Vorteil ist, dass der Fischer die Angelrute nicht berühren muss während er auf den Biss eines Fisches warten und dadurch der Fisch nicht gewarnt und verscheucht werden kann.

Bei einer Ausführungsform der Erfindung nach Fig. 1 ist in die Armlehne 3 eine aufklappbare und arretierbare Ablage 21 integriert. Diese Ablage 21 kann dazu benutzt werden diverses Kleinmaterial wie zum Beispiel Schimmer abzulegen oder auch um Getränke abzustellen.

Das in Fig. 1 dargestellte Staufach 15 umfasst vorzugsweise mehrere verschließbare Schubladen 16. Das Stauchfach 15 erlaubt das sichere Verstauen von Kleinteilen, die ohne dieses verschließbare Staufach 15 sehr leicht verloren gehen könnten, wodurch dem Fischer finanzieller Schaden entstehen würde. Vorzugsweise umfasst der Verschlussmechanismus für die Schublade 16 einen Schnappverschluß.

Die verstellbar angebrachten Sesselbeine 5 erlauben dem Fischer den Fischersessel 1 ideal für jedes Gelände einzustellen. Der Sesselbeinverstellmechanismus 14 umfasst vorzugsweise ein Zahnradgetriebe oder eine Rasterschiene. Andere stufenlose Sesselbeinverstellmechanismen sind vorstellbar.

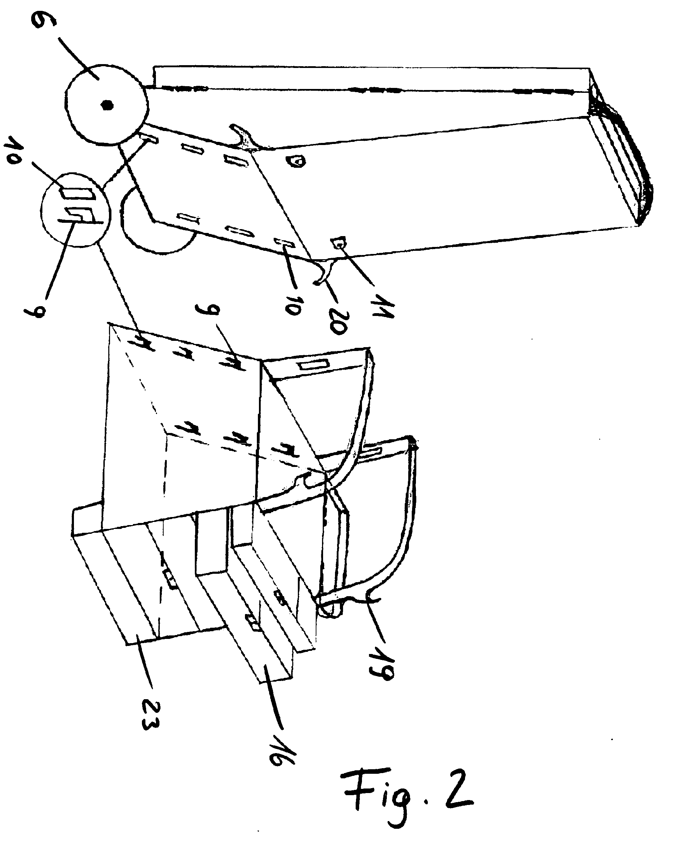

Der erfindungsgemäße Rutenkasten 7 nach Fig. 2 kann vom Rest des Fischersessel 1 abgenommen werden. Dazu wird die Rutenkastensicherung 11 gelöst und die Hacken 9, die im unteren Bereich des Fischersessels angebracht sind, aus den Ösen 10, die im unteren Bereich des Rutenkastens 7 angebracht sind, herausgezogen. Durch die Anordnung der Hacken 9 und Ösen 10 rastet der Rutenkasten 7 durch das Gewicht des Fischers am Sitz ein und wird durch die Rutenkastensicherung 11 arretiert. Diese bevorzugte Ausführungsform der gegenständlichen Erfindung erlaubt einen leichten Transport des Rutenkastens 7. In abgenommenem Zustand können die Einzelteile des Fischersessels 1 leichter in einem Fahrzeug verstaut werden.

Wie in Fig.2 dargestellt, kann es auch von Vorteil sein die vorderen Sesselbeine 5 durch eine Stützleiste 23 zu ersetzen. Die große Auflagefläche der Stützleiste gewährleistet einen besonders stabilen Stand des Fischersessels 1.

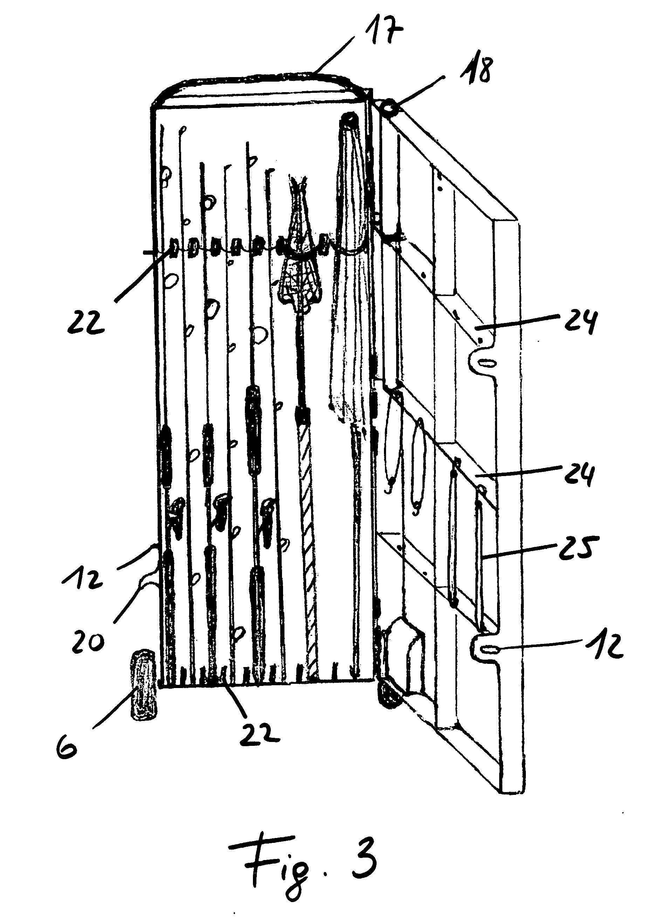

Bei einer Ausfuhrungsform der Erfindung nach Fig. 3 sind die Befestigungsleisten 22 im Rutenkasten 7 so angebracht, dass zum Beispiel Angelrute, Fischemetz und Schirm sicher verstaut werden können. Die Verstrebungen 24 der Tür des Rutenkastens 7 weisen Bereiche auf, die als Kassettenhalterungen 25 benutzt werden können. Mit Hilfe von Elastomeren können Standardfischerkassetten in diesen Bereichen sicher verstaut werden.

Die in Fig. 3 dargestellte Tür des Rutenkastens 7 weist einen Rutenkastenverschluss 12 auf, der ein Aufspringen der Tür verhindern soll.

Bevorzugte Materialien, aus denen der Fischersessel 1 hergestellt werden kann, sind Kunststoff, Holz und Metall. Besonders vorteilhaft ist die Herstellung des Fischersessels 1 aus Kunststoff im Druckgussverfahren.

## Patentansprüche

1. Fischersessel (1), welcher eine Sitzfläche (2), zwei Armlehnen (3), eine Rückwand (4), zwei vordere und zwei hintere Sesselbeine (5) umfasst,
**dadurch gekennzeichnet, dass** die Rückwand (4) als Rutenkasten (7) ausgebildet ist.

2. Fischersessel (1) nach Anspruch 1,
**dadurch gekennzeichnet, dass** der Rutenkasten (7) abnehmbar ist.

3. Fischersessel (1) nach Anspruch 1,
**dadurch gekennzeichnet, dass** die Sesselbeine (5) verstellbar sind.

4. Fischersessel (1) nach Anspruch 1,
**dadurch gekennzeichnet, dass** an Stelle der hinteren Sesselbeine (5) Räder (6) angeordnet sind.

5. Fischersessel (1) nach Anspruch 1,
**dadurch gekennzeichnet, dass** unter der Sitzfläche (2) mindestens ein Staufach (15) angeordnet ist.

6. Fischersessel (1) nach Anspruch 1,
**dadurch gekennzeichnet, dass** der Rutenkasten (7) mindestens einen Schleppgriff (17) umfasst.

7. Fischersessel (1) nach Anspruch 1,
**dadurch gekennzeichnet, dass** ein Hacken (19) an der Armlehne des Fischersessels und ein zweiter Hacken (20) am Rutenkasten so angebracht sind, dass der Hacken (19) an der Armlehne als Auflage und der Hacken (20) am Rutenkasten als Fixierung für eine Angelrute dient.

8. Fischersessel (1) nach Anspruch 1,
**dadurch gekennzeichnet, dass** der Rutenkasten (7) mindestens eine Befestigungsleiste (22) umfasst.

9. Fischersessel (1) nach Anspruch 1,
**dadurch gekennzeichnet, dass** der Rutenkasten (7) mindestens eine Verstrebung (24) aufweist, die mit Hilfe von Elastomeren als Kassettenhalterungen (25) genutzt wird.

10. Fischersessel (1),
**dadurch gekennzeichnet, dass** er aus zwei hohlen kubischen Containern gebildet wird, die mittels formschlüssiger Elemente derartig verbunden sind, dass durch das Gewicht des Benutzers diese formschlüssige Verbindung gesichert wird.
